# EUROPÄISCHE PATENTSCHRIFT

(11) **EP 0 499 976 B1**
(45) Veröffentlichungstag und Bekanntmachung des Hinweises auf die Patenterteilung: **09.10.1996**
(21) Anmeldenummer: 92102471.7
(22) Anmeldetag: 14.02.1992
(51) Int. Cl.: F23N 5/00, F23N 1/02

(54) **Verfahren zum Betreiben einer Müllverbrennungsanlage**
Method for operating an incineration plant
Procédé pour fonctionnement d'une installation d'incinération

(30) Priorität: 22.02.1991 CH 550/91
(43) Veröffentlichungstag der Anmeldung: 26.08.1992
(73) Patentinhaber: Von Roll Umwelttechnik AG, CH-8005 Zürich (CH)
(72) Erfinder: Schirmer, Alfons, CH-8046 Zürich (CH)
(74) Vertreter: Patentanwälte Schaad, Balass, Menzl & Partner AG

(56) Entgegenhaltungen:
- CH-A- 520 897
- CH-A- 663 999
- DE-A- 3 215 073
- US-A- 4 838 183
- VGB KRAFTWERKSTECHNIK Bd. 67, Nr. 2, Februar 1987, Seiten 132 - 133; G.
- SCHETTER ; E. LEITMEIR: 'UMWELTVERTRÄGLICHKEIT DER THERMISCHEN ABFALLVERWERTUNG'
- SIEMENS REVIEW. Bd. 49, Nr. 7, 1975, ERLANGEN DE Seiten 498 - 502; HILFSHEIMER UND METTLER: 'AUTOMATISCHE REGELUNG DES VERBRENNUNGSABLAUFS IN EINER MÜLLVERBRENNUNGS'
- H AKASHI 'CONTROL SCIENCE AND TECHNOLOGY FOR THE PROGRESS OF SOCIETY' 24. August 1982 , IFAC ; PERGAMON PRESS , OXFORD & U. KORTELA AND P. LAUTALA 'A NEW CONCEPT FOR A COAL POWER PLANT'

## Beschreibung

Die Erfindung betrifft ein Verfahren zum Betreiben einer mit einem Rost versehenen Müllverbrennungsanlage gemäss dem Oberbegriff von Anspruch 1.

Der Betrieb und insbesondere die gleichmässige Wärmeerzeugung in mit Öl oder Kohle betriebenen Kraftwerken ist unproblematisch. Sie wird über die gleichmässige Dosierung der Brennstoffmenge, deren Qualität konstant und bekannt ist, erzielt. Auch bei Müllverbrennungsanlagen ist, neben der konstanten Rauchgasqualität und -menge, das Hauptziel die Wärmeleistung konstant zu halten. Eine Kontrolle der Wärmemenge über die Dosierung allein ist bei Müll- oder Abfallverbrennungsanlagen nicht möglich, da die Zusammensetzung und damit der Heizwert des eingeführten Brennmaterials von Glas über Papier bis feuchte Gartenabfälle, über die Zeit stark variiert. Entsprechend ist bereits die gewünschte Konstanthaltung der Menge der erzeugten Wärme und mithin des Dampfes problematisch. Noch problematischer ist die konstante Wärmeerzeugung unter Optimierung der übrigen Parameter, z.B. der Rauchgasqualität.

Nach einem bekannten Verfahren wird versucht, die Wärmeerzeugung ausschliesslich auf Grund der Dampfmengenmessung konstant zu halten. Ein solches Vorgehen ist unbefriedigend. Es werden dabei Wertschwankungen mit grossen Amplituden erhalten.

Es ist bekannt, dass bei einem grösseren Anteil an brennbarem Material im Müll mehr Sauerstoff für die Verbrennung im Feuerraum verbraucht wird. Als Folge ist in den Rauchgasen weniger Sauerstoff vorhanden. Diese Tatsache wurde bereits von G.Schetter und E. Leitmeir ausgenützt. Sie beschreiben in VGB KRAFTWERKSTECHNIK 1987 S. 132, 133 eine Feuerungsregelung bei der die Störgrösse Müllzusammensetzung so weit vermindert wird, dass ein verhältnismässig gleichmässiger Verbrennungsablauf gewährleistet ist. Hierfür wird die Verwendung dreier voneinander unabhängiger Regelkreise vorgeschlagen, wovon die Autoren die ersten zwei bereits ausprobiert haben und die dritte nur als Arbeitsprojekt vorlag. Im Regelkreis 1 wurde der Mülldurchsatz auf Grund des Sauerstoffgehaltes im Rauchgas als Regelgrösse gesteuert. Regelkreis 2 verwendete als Regelgrösse die Dampfmenge und wirkte auf die Primärluftzuleitung ein. Der im Entwicklungsstadium befindliche Regelkreis 3 hätte die Aufgabe gehabt, die Regelung der Sekundärluft in das System miteinzubinden.

Diese bekannte Art der Regelung ist aufwendig und vermag die Gleichmässigkeit der Wärmeentbindung und mithin der Dampfmenge nicht im in der Praxis gewünschten Mass zu garantieren; eine Optimierung weiterer Parameter wird gar nicht in Betracht gezogen.

Aufgabe der vorliegenden Erfindung ist es deshalb, ein Verfahren zum Betreiben einer Müllverbrennungsanlage vorzuschlagen, das mit einem ökonomisch vertretbaren Aufwand eine Vergleichmässigung der Wärmeerzeugung und mithin eine Konstanthaltung der Dampfmenge und darüberhinaus auch eine bedarfsgerechte Optimierung bei mit Rosten ausgerüsteten Müllverbrennungsanlagen ermöglicht.

Diese Aufgabe wird gemäss dem kennzeichenden Teil von Anspruch 1 gelöst. Besonders bevorzugte Ausführungsformen der Erfindung bilden den Gegenstand der Ansprüche 2 bis 4.

Weiterhin betrifft die Erfindung ein Regelsystem zur Durchführung des erfindungsgemässen Verfahrens sowie eine Müllverbrennungsanlage mit diesem Regelsystem.

Mehrschleifige Regeleinrichtungen bzw. Regelkreise sind in der Technik bekannt. Sie werden auch als Kaskadenregelung bezeichnet. Es handelt sich dabei um einen mindestens zweischleifigen Regelkreis, wobei in der Hauptschleife eine oder mehrere Hilfsschleifen angeordnet sind. Als Hauptregler oder Führungsregler wird ein langsam arbeitender PI-Regler verwendet, dem als Hilfsregler oder Folgeregler schnell arbeitende P-Regler nachgeschaltet sind. Erfindungsgemäss wird in der Kaskadenregelung als Hauptregelgrösse die erzeugte Dampfmenge mit etwas Verzögerung erfasst. Als Hilfsregelgrösse wird der schnell verfügbare Wert des Sauerstoffgehaltes im Rauchgas verwendet. Da diese Grösse praktisch ohne Verzögerung vorliegt, kann innerhalb der Hilfsschleife der Kaskadenregelung eine unmittelbare Wirkung auf die Stellgrösse erfolgen. Durch die von den Hilfsreglern ermittelten Stellgrössen werden vorzugsweise der Stössel, der Rost und die Primärluftklappe(n), d.h. die Mülleinführung in den Verbrennungsraum, der Mülldurchsatz durch den Ofen und die Luftzufuhr für die Verbrennung gesteuert.

Durch das erfindungsgemässe Verfahren wird die Vergleichmässigung, d.h. Konstanthaltung der Wärmeerzeugung und damit der Dampfmenge, erzielt. Darüberhinaus können weitere Verfahrensparameter, z.B. Rauchgasqualität, Schlackenqualität, Lebensdauer des Rostes und Feuerungsraumtemperatur optimiert werden. Gleichzeitig wird eine konstante Rauchgasmenge und -qualität erzielt.

Weitere geeignete Hilfsregelgrössen sind die Temperatur der Feuerraumdecke und die Rosttemperatur, deren Einbeziehung in zusätzliche Hilfsregelkreise eine Verfeinerung des Regelvorganges und damit die Eliminierung von kleinen Schwankungen der Dampfmenge erlauben.

Die Messung der Temperatur an der Feuerraumdecke und am Rost bringt weitere wesentliche Vorteile mit sich. Dies wird klar ersichtlich, wenn man sich vor Augen hält, dass der auf dem Rost stattfindende Vorgang im allgemeinen etwa eine Stunde in Anspruch nimmt und dass dieser Vorgang bisher vom Bedienungspersonal rein nach Gefühl gesteuert worden ist. Es ist daher erfindungsgemäss zum ersten Mal möglich, den Verbrennungsvorgang auf dem Rost auf Grund der tatsächlich herrschenden Verhältnissen zu regeln. Die einzelnen Vorteile des Einbezuges der Temperatur der Feuerraumdecke und des Rostes sind: maximale Ausnützung der Rostfläche, verlängerte Lebensdauer des Rostes, besserer Rauchgasausbrand, bessere Rauchgasqualität und sparsamerer Luftüberschuss.

Wenn beispielsweise die Temperatur der Feuerraumdecke zu hoch ist, wird der Stössel und mithin die Müllzufuhr verlangsamt. Dadurch wird der Bedeckungsgrad des Rostes vermindert, d.h. der Rost ist weniger gut isoliert; die Rosttemperatur steigt. Als Folge wird die Rostgeschwindigkeit vermindert, um einen höheren Deckungsgrad zu erhalten; gleichzeitig wird auch die Primärluftmenge erniedrigt und die Menge der Sekundärluft entsprechend erhöht.

Die Erfindung wird anhand der beiden Figuren weiter veranschaulicht. Es zeigen rein schematisch:
- Fig. 1: ein Fliesschema einer Müllverbrennungsanlage; und
- Fig. 2: eine Darstellung einer Ausführungsform der erfindungsgemässen Regelung.

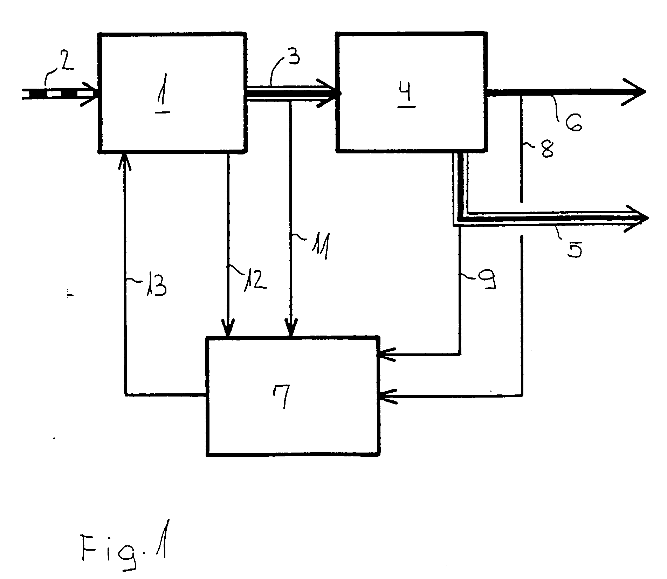

Müllverbrennungsanlagen der hier besprochenen Art sind bekannt. Sie werden u.a. von der Patentinhaberin hergestellt und vertrieben. Dem im einzelnen nicht dargestellten Feuerraum 1 in Fig. 1 wird mittels eines Stössels 2 Müll zugeführt. Die Dosierung ist eine Funktion der Stösselgeschwindigkeit. Der zudosierte Müll gelangt auf einen angetriebenen Verbrennungsrost (nicht dargestellt), wo er getrocknet, entgast und verbrannt wird. Der Verbrennungsablauf wird durch die Zuführung von Primärluft beeinflusst. Die heissen Rauchgase 3 gelangen aus dem Feuerraum 1 in einen Kessel 4, wo sie zur Dampferzeugung verwendet werden. Die abekühlten Rauchgase 5 und der Dampf 6 verlassen den Kessel 4. Einem Regelsystem 7 für die Leistungskonstanz bzw. Leistungsoptimierung werden die Messwerte für Dampf 8, Sauerstoffgehalt 9 des Rauchgases und gegebenenfalls Temperatur der Feuerraumdecke 11 und des Rostes 12 zugeführt. Das Regelsystem gibt Stellsignale 13 für den Dosierstössel, den Rost und die Primärluftklappen.

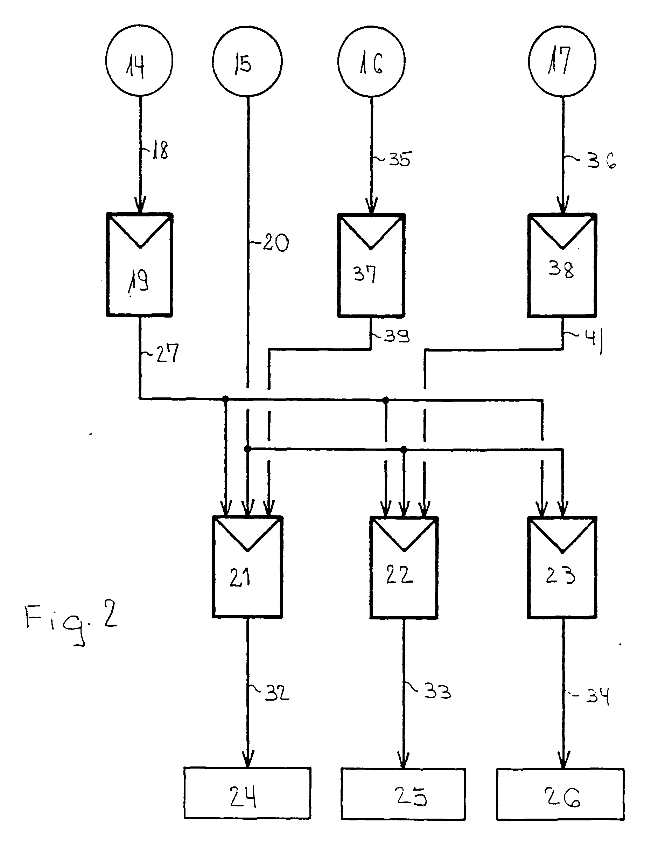

Das Regelsystem in Fig. 2 weist bekannte Messeinrichtungen 14, 15, 16, 17 für die Dampfmenge, Sauerstoffgehalt des Rauchgases, Temperatur der Feuerraumdecke und der Rost auf. Der gemessene Wert für die Dampfmenge wird als Eingangssignal 18 einem Hauptregler oder Führungsregler 19 zugeführt. Er ist ein langsam arbeitender PI-Regler. Sein Ausgangssignal 27 wird drei nachgeschalteten Hilfs- oder Folgereglern 21, 22, 23 zugeführt. Es handelt sich dabei um schnell arbeitende P-Regler. Der Sollwert der Hilfsregler 21, 22, 23 wird mittels des Ausgangssignals 27 des Hauptreglers auf Grund der gemessenen Dampfwerte verstellt. Den Hilfsreglern 21, 22, 23 wird als Eingangssignal 20 der Messwert für Sauerstoff (O₂) im Rauchgas zugeführt. Dies ist ein unmittelbarer Vorgang, da die Sauerstoffmessung ohne Verzögerung erfolgt. Die Ausgänge jedes Hilfsreglers 21, 22, 23 sind mit einem Stellglied: Stössel 24 (Mülldosierung), Rost 25 (Verweilzeit des Mülls auf dem Rost) und Primärluftklappen 26 (Luftzufuhr für die Verbrennung) verbunden. Die Stellsignale 32, 33, 34 der Hilfsregler 21, 22, 23 werden praktisch ohne Verzögerung an die Stellglieder 24, 25, 26 gegeben.

Nach einer besonders bevorzugten Ausführungsform der Erfindung wird mit entsprechenden Messeinrichtungen 16, 17 zusätzlich die Temperatur im Feuerraum und/oder die Rosttemperatur gemessen. Der Messwert wird als Eingangssignal 35, 36 je einem weiteren Hilfsreglern 37, 38 zugeführt, deren Ausgangssignale 39, 41 an die Hilfsregler 21, 22 gegeben werden. Auf diese Weise wird die Konstanthaltung und Optimierung der Wärmeentbindung in einer Müllverbrennungsanlage gewährleistet.

Zur weiteren Verbesserung des Verfahrens kann der Hilfsregler 23 für Primärluft mit der Steuerung für Sekundärluft verbunden sein. Dadurch kann die Menge der Sekundärluft derart gesteuert werden, dass die Summe von Primärluft und Sekundärluft, d.h. die Gesamtmenge der Verbrennungsluft, konstant bleibt.

## Patentansprüche

1. Verfahren zum Betreiben einer mit einem Rost ausgerüsteten Müllverbrennungsanlage, bei dem nach dem Anfachen des Feuers die Wärmeerzeugung durch Regelung der Müllzudosierung und der Verweilzeit auf dem Rost, in Abhängigkeit vom Sauerstoffgehalt im Rauchgas, und durch Regelung der Primärluftmenge, in Abhängigkeit von der erzeugten Dampfmenge, vergleichmässigt wird, dadurch gekennzeichnet, dass man die Müllzudosierung, die Verweilzeit auf dem Rost und die Primärluftmenge in Abhängigkeit sowohl von der erzeugten Dampfmenge als auch dem Sauerstoffgehalt im Rauchgas mittels einer mehrschleifigen Regeleinrichtung steuert, in der die erzeugte Dampfmenge als Hauptregelgrösse einem Hauptregler (19) und der Sauerstoffgehalt im Rauchgas als Hilfsregelgrösse dem Hauptregler nachgeschalteten, schnellreagierenden, der Müllzudosierung, der Verweilzeit auf dem Rost und der Primärluftmenge zugeordneten Hilfsreglern (21, 22, 23) zugeführt wird.

2. Verfahren nach Anspruch 1, dadurch gekennzeichnet, dass man als weitere Hilfsregelgrösse die Temperatur (16) der Feuerraumdecke benützt.

3. Verfahren nach Anspruch 1 oder 2, dadurch gekennzeichnet, dass man als weitere Hilfsregelgrösse die Rosttemperatur (17) benützt.

4. Verfahren nach einem der Ansprüche 1 bis 3, dadurch gekennzeichnet, dass man die Gesamtmenge der Verbrennungsluft konstant hält.

5. Regelsystem zur Durchführung des Verfahrens nach einem der Ansprüche 1 bis 4, mit Messeinrichtungen für die Dampfmenge (14) und den Sauerstoffgehalt (15) des Rauchgases als Regelgrössen, und Reglern, deren Ausgänge mit den Stellgliedern Stössel (24), Rost (25) und Primärluftklappen (26) verbunden sind, gekennzeichnet durch eine mehrschleifige Regeleinrichtung mit einem langsamen Hauptregler (19), dem die gemessene Dampfmenge (14) als Hauptregelgrösse zugeführt wird, und mindestens drei dem Hauptregler nachgeschalteten, schnelleren Hilfsreglern (21,22,23), denen der gemessene Sauerstoffgehalt (15) als Hilfsregelgrösse zugeführt wird und deren Ausgänge jeweils mit einem der Stellglieder verbunden sind.

6. Regelsystem nach Anspruch 5, dadurch gekennzeichnet, dass eine Temperaturmesseinrichtung (16) im Feuerraum als Hilfsregelgrösse und ein weiterer Hilfsregler (37) hierfür, dessen Ausgang mit den drei Hilfsreglern (21, 22, 23) verbunden ist, vorgesehen sind.

7. Regelsystem nach Anspruch 5 oder 6, dadurch gekennzeichnet, dass eine Temperaturmesseinrichtung (17) für den Rost als Hilfsregelgrösse und ein zusätzlicher Hilfsregler (38) hierfür, dessen Ausgang mit den drei Folgereglern (21,22,23) verbunden ist, vorgesehen sind.

8. Müllverbrennungsanlage mit einem einen Rost aufweisenden Feuerraum, einem Kessel und einem Regelsystem für die Feuerung zur Durchführung des Verfahrens nach einem der Ansprüche 1 bis 4, mit Messeinrichtungen für die Dampfmenge (14) und den Sauerstoffgehalt (15) des Rauchgases als Regelgrössen, und Reglern, deren Ausgänge mit den Stellgliedern Stössel (24), Rost (25) und Primärluftklappen (26) verbunden sind, gekennzeichnet durch eine mehrschleifige Regeleinrichtung mit einem langsamen Hauptregler (19), dem die gemessene Dampfmenge (14) als Hauptregelgrösse zugeführt wird, und mindestens drei dem Hauptregler nachgeschalteten, schnelleren Hilfsreglern (21,22,23), denen der gemessene Sauerstoffgehalt (15) als Hilfsregelgrösse zugeführt wird und deren Ausgänge jeweils mit einem der Stellglieder verbunden sind.

## Claims

1. A method for operating a refuse incineration plant provided with a grate, in which the generation of heat is evened out after the kindling of the fire by controlling the metered addition of the refuse and the residence time on the grate in dependence on the oxygen content in the flue gas, and by controlling the primary air flow in dependence on the generated steam flow, characterized in that the metered addition of the refuse, the residence time on the grate and the primary air flow are controlled in dependence both on the generated steam flow and on the oxygen content in the flue gas by means of a multiloop control device in which the generated steam flow is fed as the main control variable to a main control unit (19) and the oxygen content in the flue gas as an auxiliary control variable is fed to fast-reacting auxiliary control units (21, 22, 23) disposed down the line from the main control unit and associated with the metered addition of the refuse, the residence time on the grate and the primary air flow.

2. A method according to claim 1, characterized in that the temperature (16) of the incinerator ceiling is used as a further auxiliary control variable.

3. A method according to claim 1 or 2, characterized in that the temperature (17) of the grate is used as a further auxiliary control variable.

4. A method according to one of claims 1 to 3, characterized in that the total flow of the combustion air is kept constant.

5. A control system for operating the method according to one of claims 1 to 4, with devices for measuring the flow of steam (14) and the oxygen content (15) of the flue gas as the control variables, and control units whose outputs are connected to the control elements the ram (24), the grate (25) and primary air flaps (26), characterized by a multiloop control device with a slow main control unit (19) to which the metered steam flow (14) is fed as the main control variable, and at least three faster auxiliary control units (21, 22, 23) disposed down the line from the main control unit, to which the measured oxygen content (15) is fed as an auxiliary control variable and whose outputs are respectively connected to one of the control elements.

6. A control system according to claim 5, characterized in that there are provided a device (16) for measuring the temperature in the incinerator as an auxiliary control variable and a further auxiliary control unit (37) for this purpose, whose output is connected to the three auxiliary control units (21, 22, 23).

7. A control system according to claim 5 or 6, characterized in that there are provided a device (17) for measuring the temperature of the grate as an auxiliary control variable and an additional auxiliary control unit (38) for this purpose, whose output is connected to the three follow-up control units (21, 22, 23).

8. A refuse incineration plant with an incinerator having a grate, with a boiler and a control system for the firing, for operating the method in accordance with one of claims 1 to 4, with devices for measuring the flow of steam (14) and the oxygen content (15) of the flue gas as the control variables, and control units whose outputs are connected to the control elements the ram (24), the grate (25) and primary air flaps (26), characterized by a multiloop control device with a slow main control unit (19) to which the metered steam flow (14) is fed as the main control variable, and at least three faster auxiliary control units (21, 22, 23) disposed down the line from the main control unit, to which the measured oxygen content (15) is fed as an auxiliary control variable and whose outputs are respectively connected to one of the control elements.

## Revendications

1. Procédé d'exploitation d'une installation d'incinération d'ordures équipée d'une grille, dans lequel, après l'avivage du feu, la production de chaleur est régularisée par régulation du chargement d'ordures et de la durée de séjour des ordures sur la grille en fonction de la teneur en oxygène des fumées et par régulation du débit d'air primaire en fonction du débit de vapeur produite, caractérisé par le fait qu'on commande le chargement d'ordures, la durée de séjour des ordures sur la grille et le débit d'air primaire en fonction à la fois du débit de vapeur produite et de la teneur en oxygène des fumées au moyen d'un équipement de régulation à plusieurs boucles dans lequel le débit de vapeur produite est envoyé comme grandeur réglée principale à un régulateur principal (19) et la teneur en oxygène des fumées est envoyée comme grandeur réglée auxiliaire à des régulateurs auxiliaires à réaction rapide (21, 22, 23) montés en aval du régulateur principal et affectés au chargement d'ordures, à la durée de séjour des ordures sur la grille et au débit d'air primaire.

2. Procédé selon la revendication 1, caractérisé par le fait qu'on utilise comme grandeur réglée auxiliaire supplémentaire la température (16) du ciel du foyer.

3. Procédé selon l'une des revendications 1 et 2, caractérisé par le fait qu'on utilise comme grandeur réglée auxiliaire supplémentaire la température (17) de la grille.

4. Procédé selon l'une des revendications 1 à 3, caractérisé par le fait qu'on maintient constant le débit total d'air comburant.

5. Système de régulation pour la mise en oeuvre du procédé selon l'une des revendications 1 à 4, comportant des dispositifs de mesure du débit de vapeur (14) et de la teneur en oxygène (15) des fumées comme grandeurs réglées, et des régulateurs dont les sorties sont reliées aux éléments de réglage poussoir (24), grille (25) et registres d'air primaire (26), caractérisé par un équipement de régulation à plusieurs boucles comportant un régulateur principal lent (19) auquel est envoyé comme grandeur réglée principale le débit de vapeur mesuré (14), et au moins trois régulateurs auxiliaires plus rapides (21, 22, 23) montés en aval du régulateur principal, auxquels est envoyée comme grandeur réglée auxiliaire la teneur en oxygène mesurée (15) et dont les sorties sont reliées chacune à un des éléments de réglage.

6. Système de régulation selon la revendication 5, caractérisé par le fait qu'il est prévu comme grandeur réglée auxiliaire un dispositif de mesure de la température du foyer (16) et, pour celle-ci, un régulateur auxiliaire supplémentaire (37) dont la sortie est reliée aux trois régulateurs auxiliaires (21, 22, 23).

7. Système de régulation selon l'une des revendications 5 et 6, caractérisé par le fait qu'il est prévu comme grandeur réglée auxiliaire un dispositif de mesure de la température de la grille (17) et, pour celle-ci, un régulateur auxiliaire supplémentaire (38) dont la sortie est reliée aux trois régulateurs asservis (21, 22, 23).

8. Installation d'incinération d'ordures comportant un foyer présentant une grille, une chaudière et un système de régulation du foyer pour la mise en oeuvre du procédé selon l'une des revendications 1 à 4, comportant des dispositifs de mesure du débit de vapeur (14) et de la teneur en oxygène (15) des fumées comme grandeurs réglées, et des régulateurs dont les sorties sont reliées aux éléments de réglage poussoir (24), grille (25) et registres d'air primaire (26), caractérisé par un équipement de régulation à plusieurs boucles comprenant un régulateur principal lent (19) auquel est envoyé comme grandeur réglée principale le débit de vapeur mesuré (14), et au moins trois régulateurs auxiliaires plus rapides (21, 22, 23) montés en aval du régulateur principal, auxquels est envoyée comme grandeur réglée auxiliaire la teneur en oxygène mesurée (15) et dont les sorties sont reliées chacune à un des éléments de réglage.
